# EUROPÄISCHE PATENTANMELDUNG

(11) **EP 1 191 086 A2**
(43) Veröffentlichungstag der Anmeldung: **27.03.2002**
(21) Anmeldenummer: 01120390.8
(22) Anmeldetag: 25.08.2001
(51) Int. Cl.: C10L 3/10, F02M 21/02

(54) **Verfahren zur Nutzung von methanhaltigem Biogas**

(30) Priorität: 23.09.2000 DE 10047264
(71) Anmelder: G.A.S. Energietechnik GmbH, 47809 Krefeld (DE)
(72) Erfinder: Rautenbach, Robert, 52066 Aachen (DE); Yuce, Suleyman, 52066 Aachen (DE); Gebel, Joachim, 52066 Aachen (DE); Schmitt, Alexander, 47809 Krefeld (DE)
(74) Vertreter: Albrecht, Rainer Harald, Dr.-Ing.

(57) **Zusammenfassung**

Gegenstand der Erfindung ist ein Verfahren zur Nutzung von methanhaltigem Biogas, insbesondere von Deponiegas und Biogas aus Vergärungsanlagen oder Faulprozessen auf Kläranlagen. Das Biogas wird in einer Membrantrennanlage in zwei Gasströme getrennt. Der erste Gasstrom weist eine im Vergleich zur Biogaszusammensetzung höheren Methangehalt auf und wird als Brenngas zum Betrieb des Gasmotors eines Gasmotorgeneratorsatzes genutzt. Der zweite, mit CO₂ angereicherte Gasstrom wird in den das Biogas erzeugenden Prozess zurückgeführt.

## Beschreibung

Die Erfindung betrifft ein Verfahren zur Nutzung von methanhaltigem Biogas, insbesondere von Deponiegas und Biogas aus Vergärungsanlagen oder Faulprozessen auf Kläranlagen, wobei das Biogas zum Zwecke der Stromerzeugung dem Gasmotor eines Gasmotor/Generatorsatzes zugeführt wird.

Auf einigen Deponien sind Gasmotor/Generatorsätze installiert, die mit Deponiegas betrieben werden. Das aus dem Deponiekörper abgesaugte Deponiegas hat einen Methangehalt von etwa 50 Vol-%. Der Rest besteht im Wesentlichen aus CO₂ und ein wenig Stickstoff. Wird die Deponie geschlossen, so lässt die Biogasproduktion des Deponiekörpers über einen Zeitraum von etwa 10 Jahren langsam nach. Das installierte Gaserfassungssystem saugt dann zunehmend Luft in den Deponiekörper mit der Folge, dass der Methangehalt des abgesaugten Deponiegases abnimmt. Sinkt der Methangehalt unter 40 %, so kann der Gasmotor nicht mehr betrieben werden und muss das Deponiegas abgefackelt oder durch katalytische Verbrennung entsorgt werden.

Mit dem Absaugen von Biogas wird dem das Biogas erzeugenden Prozess CO₂ entzogen. CO₂ ist ein Edukt für die unter anaeroben Bedingungen in Anwesenheit von Organika und Mikroorganismen ablaufenden Bioreaktionen. Damit ist das Absaugen von CO₂ in mehrfacher Hinsicht nachteilig. Zum einen stellt CO₂ eine unerwünschte Inertgaskomponente bei der Verbrennung von Methan im Gasmotor dar. Zum anderen steht das entnommene CO₂ nicht mehr als Edukt für die im Deponiekörper oder in einem Faulturm ablaufenden Bioreaktionen zur Verfügung. Beim Betrieb einer Deponie kommt hinzu, dass die Entnahme von CO₂ das Eindringen von Luft in den Deponiekörper begünstigt und damit ein unerwünschter Verdünnungseffekt eintritt.

Der Erfindung liegt das technische Problem zugrunde, Biogas nach einem möglichst wirtschaftlichen Verfahren zur Stromerzeugung zu nutzen. Mit dem Verfahren soll es insbesondere auch möglich sein, Biogas mit einem Methangehalt von weniger als 40 Vol-% zur Stromerzeugung einzusetzen.

Die Aufgabe wird bei dem eingangs beschriebenen Verfahren erfindungsgemäß dadurch gelöst, dass das Biogas in einer dem Gasmotor vorgeschalteten Membrantrennanlage in zwei Gasströme getrennt wird, wobei der erste Gasstrom einen im Vergleich zur Biogaszusammensetzung höheren Methangehalt aufweist und als Brenngas zum Betrieb des Gasmotors genutzt wird und wobei der zweite mit CO₂ angereicherte Gasstrom in den das Biogas erzeugenden Prozess zurückgeführt wird.

Es stehen kommerzielle Membranen zur Gastrennung zur Verfügung, die aufgrund sehr unterschiedlicher Permeabilitäten für CH₄ und CO₂ eine wirksame Aufkonzentrierung des Methangehaltes im Gasstrom ermöglichen. Das abgesaugte Biogas wird verdichtet und einem Gaspermeationsmodul der Membrantrennanlage zugeführt, dessen Membranen eine bevorzugte Permeabilität für CO₂ aufweisen. Das druckseitig aus dem Gaspermeationsmodul abgezogene Retentat wird dem Gasmotor zugeführt, während das Permeat in den das Biogas erzeugenden Prozess zurückgeführt wird. Das erfindungsgemäße Verfahren erlaubt eine wirtschaftliche Nutzung von Biogas, das als sogenanntes Schwachgas einen Methangehalt von weniger als 40 Vol-% aufweist. Durch die erfindungsgemäße Verwendung einer Membrantrennanlage kann der Methangehalt des dem Gasmotor zugeführten Brenngases so weit angereichert werden, dass der Gasmotor stets mit einem unter motorentechnischen und abgastechnischen Gesichtspunkten günstigen Luftverhältnis betrieben wird. Der Gasmotor kann beispielsweise mit einem Luftverhältnis λ = 1,5 bis 1,8 betrieben werden, wobei ein Luftverhältnis von etwa λ = 1,6 bevorzugt ist. Bei diesem Luftverhältnis arbeiten herkömmliche Gasmotoren mit einem günstigen Motorwirkungsgrad und geringen Abgasemissionen.

Das erfindungsgemäße Verfahren erlaubt einen sehr vorteilhaften Einsatz auf einer Deponie, insbesondere auch einer bereits geschlossenen Deponie. Die Rückführung des mit CO₂ angereicherten Gasstromes in den Deponiekörper verhindert weitgehend, dass bei nachlassender Methanproduktion Falschluft in den Deponiekörper angesaugt wird. Das hat den Vorteil, dass der im Deponiekörper ablaufende anaerobe Prozess nicht durch Luft gestört wird. Auch bei geschlossenen Deponien bzw. im Altbereich von Deponien können Bedingungen für eine sehr effektive Methanproduktion aufrechterhalten werden, wodurch sich die ansonsten lange Nachsorgungsphase von Deponien verkürzen lässt.

Ein weiterer Vorteil des erfindungsgemäßen Verfahrens besteht darin, dass die für die Bioreaktion und Methanproduktion erforderliche Wärme und Feuchte über den in den Deponiekörper zurückgeführten Gasstrom zusätzlich optimiert werden kann. In weiterer Ausgestaltung lehrt die Erfindung, dass der in den Prozess zurückgeführte CO₂-reiche Gasstrom durch Abwärme, z. B. des Gasmotors, erwärmt wird und/oder der in den Prozess zurückgeführte CO₂-reiche Gasstrom mit Wasser befeuchtet wird. Zur Befeuchtung kann beispielsweise auch Deponiesickerwasser verwendet werden.

Mit der erfindungsgemäßen Rückführung eines CO₂-reichen Gasstromes in den Biogas erzeugenden Prozess ist eine Erhöhung des CO₂ Partialdruckes im Deponiekörper bzw. im Bioreaktor verbunden, welche die Methanproduktion fördert, da zumindest zum Teil die anwesenden Mikroorganismen mit CO₂ als Edukt in Verbindung mit Wasserstoff enthaltenden Organika Methan produzieren. Damit ist eine CO₂-Rückführung entsprechend dem erfindungsgemäßen Verfahren auch von erheblicher Bedeutung für die Optimierung von Faultürmen auf Kläranlagen. Abgesehen von einem wirtschaftlichen Betrieb des Gasmotors mit Biogas kann die CH₄-Produktion durch Rückführung von CO₂ angeregt werden, wodurch sich die erforderlichen Verweilzeiten im Faulturm verkürzen und Faulraumkapazitäten freigesetzt werden können.

Im Folgenden wird die Erfindung anhand von Zeichnungen, die lediglich Ausführungsbeispiele darstellen, erläutert. Es zeigen schematisch
- Fig. 1: das erfindungsgemäße Verfahren zur Nutzung von Biogas, und zwar am Beispiel von Deponiegas,
- Fig. 2: die Anwendung des erfindungsgemäßen Verfahrens auf einer Kläranlage, die eine Abwasserreinigungsanlage mit Faultürmen aufweist.

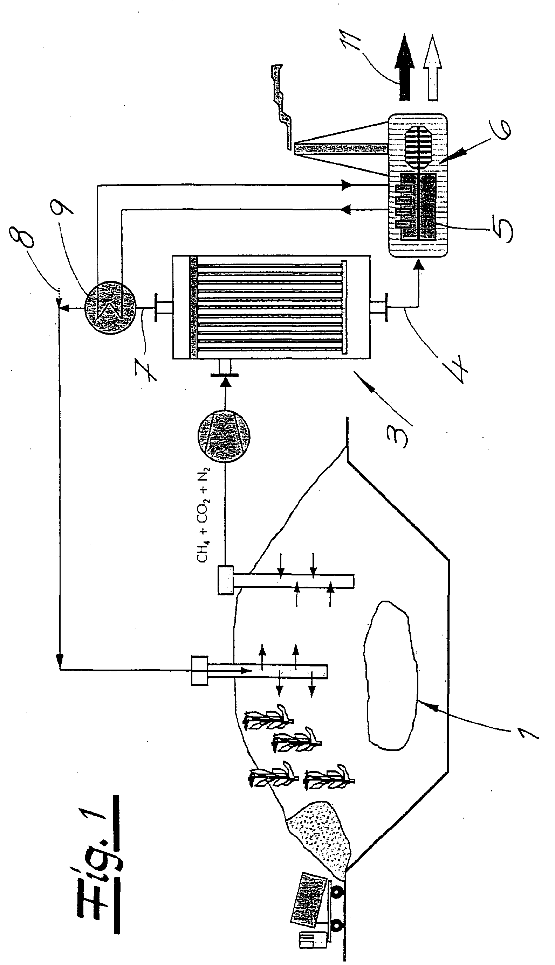

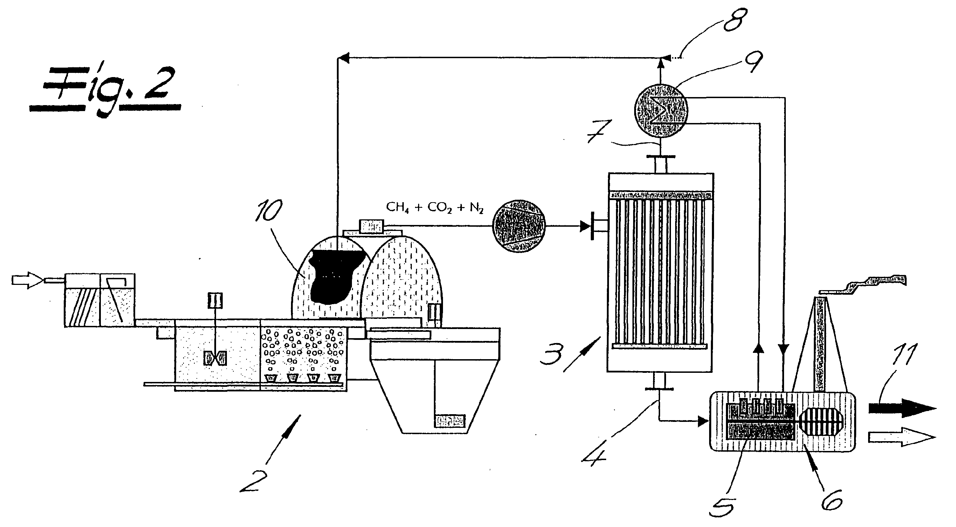

Bei dem in den Figuren dargestellten Verfahren wird Biogas, das CH₄ und CO₂ enthält und als Deponiegas aus einem Deponiekörper 1 abgesaugt wird (Fig. 1) oder bei Faulprozessen auf einer Kläranlage 2 entsteht (Fig. 2), verdichtet und einem Gaspermeationsmodul einer Membrantrennanlage 3 zugeführt, dessen Membranen eine bevorzugte Permeabilität für CO₂ aufweisen. Das druckseitig aus dem Gaspermeationsmodul abgezogene Retentat 4 weist einen im Vergleich zur Biogaszusammensetzung höheren Methangehalt auf und wird als Brenngas einem Gasmotor 5 zugeführt. Der Gasmotor 5 ist Teil eines der Stromerzeugung dienenden Gasmotor/Generatorsatzes 6. Der Methangehalt des Biogases wird in der Membrantrennanlage 3 so weit angereichert, dass der Gasmotor 5 mit einem unter motorentechnischen und abgastechnischen Gesichtspunkten günstigen Luftverhältnis betrieben werden kann. Besonders bevorzugt ist ein Luftverhältnis von etwa λ = 1,6.

Der als Permeat 7 abgezogene Gasstrom weist einen im Vergleich zur Biogaszusammensetzung höheren CO₂-Gehalt auf und wird als CO₂ angereicherter Gasstrom in den Biogas erzeugenden Prozess zurückgeführt. Bei dem in Fig. 1 dargestellten Verfahren erfolgt die Rückführung in den Deponiekörper 1, bei dem in Fig. 2 dargestellten Verfahren in den Faulturm 10 einer auf einer Kläranlage 2 installierten Abwasserreinigungsanlage.

Der in den Prozess zurückgeführte CO₂-reiche Gasstrom 7 kann dabei mit Wasser 8 befeuchtet und unter Ausnutzung der Abwärme des Gasmotors 5 in einem Wärmetauscher 9 erwärmt werden. Die mit der Rückführung des Gasstromes verbundene Erhöhung des CO₂-Partialdruckes im Deponiekörper 1 bzw. im Faulturm 10 fördert die Methanproduktion, da zumindest zum Teil die anwesenden Mikroorganismen mit CO₂ als Edukt in Verbindung mit Wasserstoff enthaltenden Organika Methan produzieren. Durch Erwärmung und Befeuchtung können optimale Voraussetzungen für die ablaufenden Bioreaktionen geschaffen werden.

Als Gaspermeationsmodule können kommerzielle Module mit spiralförmig gewickelten Membranen, Hohlfasermembranen oder Kapillarmembranen eingesetzt werden. Als Membranmaterialien eignen sich z. B. Polysulfone, insbesondere auch mit einer Beschichtung aus Silikon, Polyethersulfone, Polyimide, Celluloseacetat, u.a.. Die genannten Materialien weisen bevorzugte Permeabilitäten für CO₂ und nur geringe Permeabilitäten für N₂ und Methan auf. Nach Maßgabe der anfallenden Biogasmenge und der erforderlichen Konzentrierung können mehrere Gaspermeationsmodule parallel und/oder in Reihe geschaltet werden.

Der mit dem Gasmotor/Generatorsatz 6 erzeugte Strom 11 kann in ein Stromnetz eingespeist werden. Das erfindungsgemäße Verfahren ermöglicht einen leistungsfähigen Betrieb von mit Deponiegas betriebenen Gasmotor/Generatorsätzen 6 auf Deponien. Insbesondere kann durch das erfindungsgemäße Verfahren die Laufzeit vorhandener Gasmotor/Generatorsätze auf geschlossenen Deponien, deren Methanproduktion nachlässt, verlängert werden. Daneben eignet sich das erfindungsgemäße Verfahren zur Nutzung von Biogas aus Vergärungsanlagen oder Faulprozessen auf Kläranlagen. Durch die erfindungsgemäße Rückführung eines CO₂-reichen Gasstromes wird hier die Methanproduktion der Bioreaktionen angeregt.

## Patentansprüche

1. Verfahren zur Nutzung von methanhaltigem Biogas, insbesondere von Deponiegas und Biogas aus Vergärungsanlagen oder Faulprozessen auf Kläranlagen, wobei das Biogas zum Zwecke der Stromerzeugung dem Gasmotor eines Gasmotor/Generatorsatzes zugeführt wird, **dadurch gekennzeichnet, dass** das Biogas in einer dem Gasmotor vorgeschalteten Membrantrennanlage in zwei Gasströme getrennt wird, wobei der erste Gasstrom einen im Vergleich zur Biogaszusammensetzung höheren Methangehalt aufweist und als Brenngas zum Betrieb des Gasmotors genutzt wird und wobei der zweite mit CO₂ angereicherte Gasstrom in den das Biogas erzeugenden Prozess zurückgeführt wird.

2. Verfahren nach Anspruch 1, **dadurch gekennzeichnet, dass** das Biogas verdichtet und einem Gaspermeationsmodul der Membrantrennanlage zugeführt wird, dessen Membranen eine bevorzugte Permeabilität für CO₂ aufweisen, wobei das druckseitig aus dem Membranmodul abgezogene Retentat dem Gasmotor zugeführt und das Permeat in den Biogas erzeugenden Prozess zurückgeführt wird.

3. Verfahren nach Anspruch 1 oder 2, **dadurch gekennzeichnet, dass** ein Biogas mit einem Methangehalt von weniger als 40 Vol-% der Membrantrennanlage zugeführt und der Methangehalt des Brenngases in der Membrantrennanlage so weit angereichert wird, dass der Gasmotor mit einem unter motorentechnischen und abgastechnischen Gesichtspunkten günstigen Luftverhältnis betrieben wird.

4. Verfahren nach Anspruch 3, **dadurch gekennzeichnet, dass** der Gasmotor mit einem Luftverhältnis λ = 1,5 bis 1,8, vorzugsweise λ = 1,6, betrieben wird.

5. Verfahren nach einem der Ansprüche 1 bis 4, **dadurch gekennzeichnet, dass** der in den Prozess zurückgeführte CO₂-reiche Gasstrom durch Abwärme erwärmt wird.

6. Verfahren nach einem der Ansprüche 1 bis 5, **dadurch gekennzeichnet, dass** der in den Prozess zurückgeführte CO₂-reiche Gasstrom mit Wasser befeuchtet wird.
